# EUROPÄISCHE PATENTSCHRIFT

(11) **EP 0 317 590 B1**
(45) Veröffentlichungstag und Bekanntmachung des Hinweises auf die Patenterteilung: **04.08.1993**
(21) Anmeldenummer: 88904465.7
(22) Anmeldetag: 19.05.1988
(51) Int. Cl.: B60N 2/50, B60N 2/52

(54) **LUFTGEFEDERTER FAHRZEUGSITZ**
AIR-SUSPENDED VEHICLE SEAT
SIEGE A SUSPENSION PNEUMATIQUE POUR VEHICULES

(30) Priorität: 22.05.1987 DE 3717703
(43) Veröffentlichungstag der Anmeldung: 31.05.1989
(73) Patentinhaber: GEBR. ISRINGHAUSEN, D-32657 Lemgo (DE)
(72) Erfinder: GRANZOW, Manfred, D-4926 Dörentrup (DE); MISCHER, Hans, Peter, D-4934 Bad Meinberg (DE)
(74) Vertreter: Lange, Gerd, Dipl.-Ing.
(86) Internationale Anmeldenummer: DE8800292
(87) Internationale Veröffentlichungsnummer: WO8809270

(56) Entgegenhaltungen:
- EP-A- 0 049 167
- DE-A- 1 430 786
- US-A- 3 558 188
- US-A- 4 589 620

## Beschreibung

Die Erfindung betrifft einen luftgefederten Fahrzeugsitz nach dem Oberbegriff des Anspruches 1 mit einem Sitzrahmen, der mittels an ihm angeordneter Scherenlenker und unter Zwischenschaltung einer Luftfeder an einem dem Fahrzeugaufbau zugeordneten Bodenrahmen vertikal schwingfähig abgestutzt ist.

Fahrzeugsitze dieses Typs haben den Vorteil, daß sie allein durch Verändern des Innendruckes der Luftfeder auf unterschiedliche statische Höhen (das ist die Mittellage, um die der Sitz bei Belastung mit einem Fahrergewicht schwingt = midride-position) eingestellt werden können (sog. integrierte Höheneinstellung).

Generell wird bei Fahrzeugsitzen dieses Typs auch gefordert, daß sie eine Blockiervorrichtung aufweisen, mittels der die Vertikalschwingungen des Sitzes blockierbar sind, z.B. für den Fall, daß der Fahrzeugsitz auf sehr schlechten Fahrwegen oder im groben Gelände zu stark schwingt, oder z.B. für den Fall, daß beim Defektwerden des Luftfedersystems der Sitz die Neigung hat, in eine bodennahe Position bis zu seinen unteren Anschlägen abzusinken, in der der Fahrer das Fahrzeug nicht mehr kontrollieren kann.

Aus diesem Grund sind die Vertikalschwingungen des Fahrzeugsitzes nach dem Oberbegriff des Anspruches 1 mit einer Blockiervorrichtung blockierbar, die ein Fixierelement aufweist, das an den Scherenlenkern angelenkt ist und von diesen entsprechend den Vertikalschwingungen des Sitzes bewegt wird, und die eine Fixiervorrichtung aufweist, die zum Blockieren der Vertikalschwingungen an dem Fixierelement angreift und dieses fixiert.

Eine bekannte Blockiervorrichtung dieser Art besteht z.B. aus einem Fanghaken (= Fixiervorrichtung), der einen an den Scherenlenkern befestigten Bolzen (= Fixierelement) fängt und dadurch die Vertikalschwingungen des Sitzes blockiert (siehe z.B. DE-A-3 534 378). Solche Fanghaken haben jedoch den Nachteil, daß sie nur immer in einer vorher konstruktiv festgelegten statischen Höhe den Sitz blockieren können und somit den Fahrer vielfach zwingen, beim Betätigen der Blockiervorrichtung auf einer statischen Höhe zu sitzen, die gar nicht der von ihm entsprechend seiner Körpergröße gewünschten und mittels der integrierten Höheneinstellung eingestellten statischen Höhe entspricht.

Der gleiche Nachteil ist auch bei einer anderen vorbekannten Blockiervorrichtung vorhanden, bei der Aufsattelböcke in Kombination mit einer vollständigen Entlüftung der Luftfeder benutzt werden. Die Aufsattelböcke liegen während des normalen Fahrbetriebes des Fahrzeugsitzes flach im Bodenrahmen des Sitzes und werden nur beim Betätigen eines die Blockiervorrichtung aktivierenden Handhebels aufgerichtet, so daß sich der Sitz bei gleichzeitigem vollständigen Entlüften der Luftfeder auf die Aufsattelböcke absenken kann. Natürlich muß zu diesem Zweck die Höhe der Aufsattelböcke niedriger oder allenfalls gleich hoch mit der niedrigsten statischen Höhe sein, die bei dem Fahrzeugsitz mittels der integrierten Höheneinstellung einstellbar ist, da andernfalls der Sitz bei einer niedrig eingestellten statischen Höhe im Stillstand des Fahrzeuges gar nicht blockierbar ist bzw. nicht auf die Aufsattelböcke aufgesetzt werden kann. Auch ist es von grundsätzlichem Nachteil,daß bei einer solchen Aufsattel-Blockierung der Sitz nicht festgehalten wird, so daß z.B. bei schwieriger Geländefahrt trotz der angeblichen Blockierung der Vertikalschwingungen der Sitz mit dem Fahrer nach oben geschleudert werden kann, wodurch der Fahrer die Kontrolle über sein Fahrzeug verlieren kann.

Aufgabe der Erfindung ist es, einen Fahrzeugsitz mit einer Blockiervorrichtung des vorgenannten Typs zu schaffen, die gewährleistet, daß der Fahrer den Sitz in jeder von ihm mittels der integrierten Höheneinstellung gewählten statischen Höhe feststellen und alle Vertikalschwingungen nach oben und unten wirksam blockieren kann.

Diese Aufgabe wird erfindungsgemäß dadurch gelöst, daß das Fixierelement in Form eines sich gerade oder gebogen erstreckenden Körpers ausgebildet ist, der mit einer Körperkante analog den Vertikalschwingungen des Sitzes an der Fixiervorrichtung vorbeibewegt wird, und daß die Körperkante eine Längserstreckung als so benannte Fixierstrecke besitzt, die gleich oder größer ist als die in allen Höheneinstellungen maximal auftretenen Vertikalschwingungen des Sitzes, und daß die Fixiervorrichtung an der Fixierstrecke des Fixierelementes in fein gestuften Positionen oder stufenlos angreifen und das Fixierelement fixieren kann.

Es ist ein wesentlicher Vorteil der Erfindung, daß nunmehr der Sitz sich nicht punktgenau in einer vorher konstruktiv festgelegten Höhenposition befinden muß, um blockiert werden zu können. Der erfindungsgemäße Sitz kann in jeder gewünschten Höhenposition blockiert werden, da die Vertikalschwingungen des Sitzes analog auf einen Körper übertragen werden, der eine Körperkante mit bestimmter Längserstreckung als so benannte Fixierstrecke besitzt, die ständig beim Schwingen des Sitzes an einer Fixiervorrichtung vorbeibewegt wird. In jedem Augenblick und in jeder Position der Körperkante bzw. der Fixierstrecke kann der als Fixierelement dienende Körper mittels der Fixiervorrichtung fixiert werden.

Ein solches Fixierelement kann gemäß einer bevorzugten Ausführungsform der Erfindung durch eine axial bewegte Stange gegeben sein, wobei die Fixiervorrichtung als eine an der Fixierstrecke der Stange angreifende Klemmvorrichtung ausgebildet ist, die entlang der Fixierstrecke in jeder Position die Stange wirksam festhalten kann. Bezüglich einer genauen konstruktiven Ausführung eines solchen Stangen-Fixierelementes mit der Klemm-Fixiervorrichtung vgl. z.B. DE-A-3 420 103.

Andere Fixierelemente und Fixiervorrichtungen sind jedoch auch für die Realisierung der erfindungsgemäßen Lehre brauchbar, z.B. ein entsprechend den Vertikalschwingungen des Sitzes bewegtes Gewebe- oder Stahlband, das mittels der Fixiervorrichtung feststellbar ist oder z.B. ein entsprechend den Vertikalschwingungen des Sitzes rotiertes Zahnsegment o. dgl., das durch Eingriff einer verzahnten Fixiervorrichtung feststellbar ist.

Da sich Blockiervorrichtungen unter Last oftmals nur schwer lösen bzw. entblockieren lassen, ist die weitere Aufgabe gestellt, diesen Nachteil zu vermeiden. Dies wird bei dem erfindungsgemäßen Fahrzeugsitz nach Anspruch 2 dadurch erreicht, daß gleichzeitig beim Betätigen der Blockiervorrichtung ein Sperrventil geschaltet wird, das sowohl die Druckluftzufuhr als auch den Druckluftablaß aus der Luftfeder sperrt. Es wird also im Gegensatz zum vorbekannten Stand der Technik nicht das Entlüften der Luftfeder angestrebt, sondern ein vollständiges Schließen der Luftfeder mit dem Innendruck der Luftfeder, den diese beim Blockieren des Sitzes hat.

Hierdurch werden zwei Vorteile erreicht. Zum einen wird der Sitz bzw. der Fahrer mit seinem Gewicht auch weiterhin von dem Innendruck der Luftfeder getragen, so daß die Blockiervorrichtung bei intakter Luftfeder keine nennenswerte Last aufzunehmen hat und jederzeit leicht wieder gelöst werden kann. Als weiterer Vorteil einer im blockierten Zustand des Sitzes vollständig geschlossenen Luftfeder ergibt sich , daß dann auch der Sitzbenutzer nicht unbeabsichtigt durch Betätigen der Höheneinstellung, d.h. durch Druckluftzufuhr in die Luftfeder die Belastungen auf die mechanische Blockiervorrichtung erhöhen kann.

Betrachtet man die Möglichkeit, daß bei einem Fahrzeugsitz des vorgenannten Typs auch einmal das Luftfedersystem defekt werden kann, dann hat der erfindungsgemäße Fahrzeugsitz den Vorteil, daß es dem Fahrer trotz fehlender Luftfeder-Unterstützung immer noch möglich ist, den Fahrzeugsitz durch Betätigen der Blockiervorrichtung auf jede von ihm gewünschte statische Höhe einzustellen und somit mit der notwendigen Sicherheit das Fahrzeug zu kontrollieren. Das gilt auch dann, wenn bei einem defekten Luftfedersystem ein Fahrerwechsel stattfindet und die statische Höhe des Fahrzeugsitzes entsprechend der veränderten Körpergröße des Fahrers neu eingestellt werden muß.

Nachfolgend wird ein Ausführungsbeispiel der Erfindung näher beschrieben. Es zeigt:

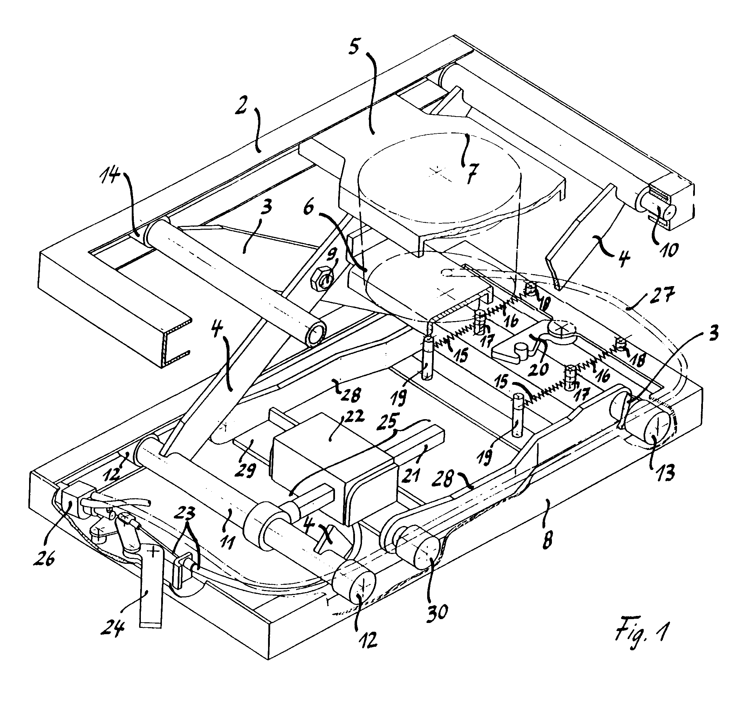

- Fig. 1: in perspektivischer Darstellung einen erfindungsgemäßen Fahrzeugsitz.

Dargestellt ist von einem Fahrzeugsitz der grundsätzliche Aufbau des Schwingsystems. Die Polsterteile wie z.B. Sitzpolster, Rückenlehne, ggf. Armlehnen usw. sind nicht mit dargestellt.

Das Schwingsystem besteht aus dem Sitzrahmen 2, der mittels an ihm angeordneter Scherenlenker 3 und 4 und unter Zwischenschaltung der Luftfeder 7 an einem der Fahrzeugaufbau (nicht dargestellt) zugeordneten Bodenrahmen 8 vertikal schwingfähig abgestützt ist. Dabei liegt das obere Ende der Luftfeder an der oberen Quertraverse 5 an, die in den Sitzrahmen 2 eingeschweißt ist, und das untere Ende der Luftfeder stützt sich auf der unteren Quertraverse 6 ab, die an den beiden innen liegenden Scherenlenkern 4 angeschweißt ist.

Die Scherenlenker 3 und 4 , die in dem Scheren-Kreuzungspunkt mittels der Schraube 9 gelenkig miteinander verbunden sind, sind bei dem dargestellten Schwingsystem paarweise vorhanden, jedoch ist das darstellungsgemäß vorne liegende Paar weggebrochen, um eine bessere Übersicht über das System zu erhalten.

Das Scherenlenker-Paar 4 besitzt im Sitzrahmen 2 ein festes Lager auf der Achse 10. Im unteren Bodenrahmen 8 ist das Scherenlenker-Paar 4 mittels der Achse 11 auf Rollen 12 gelagert, so daß hier ein sog. Loslager gegeben ist.

Das Scherenlenker-Paar 3 ist sowohl im Sitzrahmen 2 als auch im Bodenrahmen 8 mit Loslagern angeordnet. Erkennbar sind hier die Rollen 13 und 14.

Durch die Loslager 12 und 13 im Bodenrahmen können die Scherenlenker insgesamt im Bodenrahmen 8 horizontal schwingen. Hierfür sind die Zugfeder-Paare 15 und 16 vorgesehen, die mit ihren jeweils äußeren Enden an den Bolzen 18 und 19 angelenkt sind, die jeweils an dem Bodenrahmen 8 befestigt sind. Die jeweils inneren Enden der Zugfederpaare 15 und 16 sind an den Bolzen 17 festgelegt, die auf einer mit den Laschen 28 Verschweißten Quertraverse sitzen, so daß die Bolzen 17 mit den rollengelagerten Laschen 28 und den damit verbundenen Scherenlenkern in dem Bodenrahmen 8 horizontal verfahren, d.h. schwingen können.

Sollen diese Horizontalschwingungen blockiert werden, dann ist dafür der Fanghaken 20 vorgesehen, der z.B. mittels eines Bowdenzuges oder eines Hebels (nicht dargestellt) betätigt werden kann.

Die erfindungsgemäße Blockiervorrichtung zum Blockieren der Vertikalschwingungen ist durch die im Bodenrahmen 8 liegende Stange 21 gegeben, die über die Achse 11 verbunden ist. Diese Stange 21 wird entsprechend den Vertikalschwingungen des Schwingsystems in axialer Richtung bewegt.

Die Stange 21 wird übergriffen von einer Klemmvorrichtung 22, die mittels eines Bowdenzuges 23 und des Hebels 24 aktivierbar ist und die Stange 21 in jeder ihrer Positionen entlang der Fixierstrecke 25 feststellen kann.

Beim Betätigen des Hebels 24 wird zugleich ein Sperrventil 26 geschaltet, das im blockierten Zustand der Blockiervorrichtung sowohl die Druckluftzufuhr als auch den Druckluftablaß aus der Luftfeder 7 sperrt. Zu diesem Zweck ist der Luftschlauch 27 zum Belüften und Entlüften der Luftfeder mit dem Sperrventil 26 verbunden.

Um zu erreichen, daß das Blockieren der Vertikalschwingungen des Schwingsystems unabhängig von den mittels des Fanghakens 20 blockierbaren Horizontalschwingungen vorgenommen werden kann, ist die erfindungsgemäße Vertikal-Blockiervorrichtung nur zwischen den Scherenlenker-Paaren 3 und 4 wirksam. Wie aus der Zeichnung erkennbar, sind innerhalb des Bodenrahmens 8 auf den Rollen 30 und 13 gelagerte Laschen 28 vorgesehen, die die Scherenlenker-Paare 3 mit der Quertraverse 29 der Laschen 28 verbinden. Auf dieser Quertraverse 29 ist die Klemmvorrichtung 22 befestigt. Wird mittels des Hebels 24 über den Bowdenzug 23 die Klemmvorrichtung 22 aktiviert, dann fixiert diese die Stange 21, wodurch die Vertikalschwingungen des Sitzes und die Schwingbewegungen der Scherenlenker-Paare 3 und 4 unterbunden werden.

Erkennbar ist, daß durch die entsprechend der erfindungsgemäßen Lehre bemessene Fixierstrecke 25 der Stange 21 die Blockiervorrichtung in jeder gewünschten Position des Sitzes wirksam werden kann unabhängig davon, welche Höhenposition des Sitzes durch Verändern des Innendruckes der Feder 7 als statische Höhe eingestellt ist.

## Patentansprüche

1. Luftgefederter Fahrzeugsitz
- mit einem Sitzrahmen (2), der mittels an ihm angeordneter Scherenlenker (3, 4) und unter Zwischenschaltung einer Luftfeder (7) an einem dem Fahrzeugaufbau zugeordneten Bodenrahmen (8) vertikal schwingfähig abgestützt ist,
- und dessen statische Höhe allein durch Verändern des Innendruckes der Luftfeder (7) auf unterschiedliche Höhenpositionen einstellbar ist (= integrierte Höheneinstellung),
- wobei die Vertikalschwingungen des Sitzes mittels einer Blockiervorrichtung (21, 22) blockierbar sind, die ein Fixierelement (21)aufweist, das an den Scherenlenkern (4) angelenkt ist und von diesen entsprechend den Vertikalschwingungen des Sitzes bewegt wird, und die eine Fixiervorrichtung (22) aufweist, die zum Blockieren der Vertikalschwingungen an dem Fixierelement (21) angreift und dieses fixiert,
dadurch gekennzeichnet,
- daß das Fixierelement (21) in Form eines sich gerade oder gebogen erstreckenden Körpers ausgebildet ist, der mit einer Körperkante analog den Vertikalschwingungen des Sitzes an der Fixiervorrichtung (22) vorbeibewegt wird,
- daß die Körperkante eine Längserstreckung als so benannte Fixierstrecke (25) besitzt, die gleich oder größer ist als die in allen Höheneinstellungen maximal auftretenden Vertikalschwingungen des Sitzes,
- und daß die Fixiervorrichtung (22) an der Fixierstrecke (25) des Fixierelements (21) in fein gestuften Positionen oder stufenlos angreifen und das Fixierelement fixieren kann.

2. Fahrzeugsitz nach Anspruch 1,
gekennzeichnet durch
die Kombination der Blockiervorrichtung (21, 22) mit einem Sperrventil (26), das beim Betätigen der Blockiervorrichtung sowohl die Druckluftzufuhr als auch den Durckluftablaß aus der Luftfeder (7) sperrt.

3. Fahrzeugsitz nach Anspruch 1 oder 2,
dadurch gekennzeichnet,
daß das Fixierelement durch eine in dem Bodenrahmen oder dem Sitzrahmen angeordnete Stange (21) und die Fixiervorrichtung durch eine an der Fixierstrecke (25) der Stange (21) angreifende Klemmvorrichtung (22) gegeben ist.

## Claims

1. Air suspension seat for vehicles
- having a seat frame (2) which is supported, in such a manner that it is able to move vertically, on a base frame (8) associated with the vehicle structure, by way of scissor members (3, 4) arranged on the seat frame and with the interposition of an air spring (7),
- and the static height of which can be adjusted to different positions merely by altering the internal pressure of the air spring (7) (= integrated height adjustment),
- whereby the vertical movements of the seat are lockable by means of a locking device (21,22), said locking device showing a fixing element (21) which is articulated to the scissor members (4) and is moved by these scissor members in accordance with the vertical movements of the seat,
and said locking device having a fixing device (22) that, for blocking the vertical movements, acts on the fixing element (21) and fixes said fixing element,
characterized in that
- the fixing element (21) is extended in the form of a straight or curved member having an edge of its body which passes the fixing device (22) analogous to the vertical movements of the seat,
- the edge of the body has a longitudinal section as a so-called fixing section (25),
which is the same size as or larger than the maximum vertical movement of the seat occuring at all height settings,
- and that the fixing device (22) acts closely stepped or infinitely variable on the fixing section (25) of the fixing element (21) to secure the relative position of said fixing element.

2. Vehicle seat according to claim 1
characterized by
the combination of the locking device (21, 22) with a valve member (26) which stops the supply of compressed air to and the release of compressed air from the air spring (7) when the locking device is actuated.

3. Vehicle seat according to claim 1 or 2,
characterized in that
the fixing element is in the form of a rod (21) arranged in the base frame or in the seat frame and the fixing device is in the form of a clamping device (22) that acts on the fixing section (25) of the rod (21).

## Revendications

1. Siège à suspension pneumatique pour un véhicule:
- muni d'un cadre de siège (2) qui est appuyé en étant susceptible d'osciller verticalement, sur un cadre de base (8) associé à la super-structure du véhicule, par l'intermédiaire de bielles (3, 4) articulées et montées sur ce cadre de siège et avec interposition d'un ressort pneumatique (7).
- et dont la hauteur statique est réglable à des positions de hauteur différentes simplement par variation de la pression interne du ressort pneumatique (7) (à réglage de hauteur intégré),
- dans lequel les oscillations verticales du siège sont susceptibles d'être bloquées par un dispositif de blocage (21, 22) qui comporte un élément de fixation (21) qui est articulé sur la bielle en ciseaux (4) et qui est déplacé par celle-ci en correspondance aux oscillations verticales du siège, et qui comporte un dispositif de fixation (22) qui, afin de réaliser un blocage des oscillations verticales, agit sur l'élément de fixation (21) en le fixant, caractérisé en ce que:
- l'élément de fixation (21) est réalisé sous la forme d'un corps qui s'étend droit ou incurvé et qui se déplace, avec l'une des faces du corps, par rapport au dispositif de fixation (22) de façon analogue aux oscillations verticales du siège,
- en ce que la face du corps présente une extension longitudinale dénommée course de fixation (25), et qui est identique ou supérieure aux oscillations maximales qui se produisent dans toutes les positions de réglage de hauteur,
- et en ce que le dispositif de fixation (22) agit sur la course de fixation (25) de l'élément de fixation (21) en des positions finement étagées ou en réglage continu et peut fixer l'élément de fixation.

2. Siège de véhicule selon la revendication 1, caractérisé par la combinaison du dispositif de blocage (21, 22) avec une valve de blocage ou d'isolement (26) qui, lors de l'actionnement du dispositif de blocage, est susceptible de bloquer l'alimentation en air comprimé ainsi que l'évacuation de l'air comprimé hors du ressort pneumatique (7).

3. Siège de véhicule selon la revendication 1 ou 2, caractérisé en ce que l'élément de fixation est constitué par une barre (21) disposée dans le cadre de base ou dans le cadre de siège, et le dispositif de fixation est constitué par un dispositif de serrage (22) qui agit sur la course de fixation (25) de la barre (21).
